# FASCICULE DE BREVET EUROPEEN

(11) **EP 3 733 449 B1**
(45) Date de publication et mention de la délivrance du brevet: **06.04.2022**
(21) Numéro de dépôt: 20156387.1
(22) Date de dépôt: 10.02.2020
(51) Int. Cl.: B60N 2/812, B60N 2/815

(54) **SYSTÈME D'APPUI-TÊTE DE SIÈGE DE VÉHICULE AUTOMOBILE**
KOPFSTÜTZENSYSTEM AM SITZ EINES KRAFTFAHRZEUGS
HEADREST SYSTEM FOR A MOTOR VEHICLE SEAT

(30) Priorité: 19.02.2019 FR 1901632
(43) Date de publication de la demande: 04.11.2020
(73) Titulaire: TESCA France, 75008 Paris (FR)
(72) Inventeur: JACQUET, Bruno, 75008 Paris (FR); DELUS, Christian, 51380 Verzy (FR); CARPENTIER, Alain, 51390 Gueux (FR); BONTE, Emmanuel, 51100 Reims (FR)
(74) Mandataire: Sayettat, Julien Christian

(56) Documents cités:
- EP-A1- 1 529 682
- EP-B1- 1 529 682
- DE-A1-102010 045 614
- FR-A1- 2 888 794
- FR-B1- 2 888 794
- US-A1- 2015 239 377

## Description

L'invention concerne un système d'appui-tête de siège de véhicule automobile et un appui-tête d'un tel système.

Il est connu du document FR-2 888 794 de prévoir un système de réglage et de blocage en translation d'une tige verticale d'appui-tête dans une gaine, ladite tige étant pourvue d'un cran de blocage supérieur et d'un cran de blocage inférieur, tous deux décalés axialement et opposés transversalement afin de définir deux positions extrêmes de la gaine par rapport à la tige.

Le document EP-1 529 682 prévoit une structure de verrouillage d'appui-tête, comprenant une pluralités de fentes de verrouillage formées dans une tige d'appui-tête de section circulaire, et une plaque de verrouillage adaptée à être montée dans l'une quelconque des fentes de verrouillage, ladite plaque présentant une portion concave et une portion plane complémentaires respectivement du fond et des surfaces latérales desdites fentes.

Le document DE-10 2010 045614 prévoit un système de verrouillage d'un appui-tête comprenant une tige présentant au moins un évidement pour l'engagement d'un élément de verrouillage d'un dispositif de verrouillage, ledit évidement comprenant :
- une surface d'appui formée de manière convexe dans une section transversale de ladite tige, ladite surface d'appui présentant un rayon supérieur à celui d'une surface externe de ladite tige ;
- une surface de verrouillage, sur laquelle sont formées des portées d'appui qui délimitent la largeur de l'élément de verrouillage et qui s'étendent entre la surface externe et la surface d'appui de ladite.

Par ailleurs, le document US-2015/0239377 prévoit un appui-tête pourvu d'une armature comprenant une tige dans laquelle est disposé un manchon agencé de façon à renforcer au moins une zone de ladite tige.

Il est également connu de réaliser un système d'appui-tête de siège de véhicule automobile, ledit système comprenant :
- un appui-tête pourvu d'une armature, ladite armature comprenant une première et une deuxième tige parallèles dont les extrémités supérieures sont reliées entre elles par une traverse, la partie supérieure de ladite armature étant recouverte d'un coussin, au moins ladite première tige étant pourvue d'un cran d'anti-extraction sous forme de tranchée, ledit cran présentant :
   ∘ une face de crantage inférieure de blocage de ladite première tige en coulissement vers le haut,
   ∘ une face supérieure de blocage de ladite première tige en coulissement vers le bas, ladite première tige étant pourvue d'un chanfrein principal débouchant sur ladite face supérieure,
- un premier et un deuxième manchon de réception en coulissement respectivement desdites première et deuxième tige, lesdits manchons étant destinés à être montés en haut de dossier dudit siège, au moins ledit premier manchon étant pourvu :
   ∘ d'un tiroir monté en coulissement radial et présentant un bord de crantage agencé pour pouvoir s'insérer dans ledit cran quand ils sont en regard l'un de l'autre,
   ∘ d'un ressort d'actionnement dudit tiroir vers ladite première tige de manière à permettre l'insertion progressive dudit bord dans ledit cran quand ladite première tige est actionnée en coulissement vers le haut, ledit bord coulissant contre ledit chanfrein principal jusqu'à son insertion dans ledit cran.

Le rôle du cran d'anti-extraction est d'empêcher l'appui-tête d'être projeté dans l'habitacle du véhicule en cas d'accident, une telle situation pouvant être néfaste pour la sécurité des passagers.

Cependant, en cas de choc violent de la tête du passager contre l'appui-tête, notamment lorsque l'impact de la tête est décentré par rapport à la zone médiane dudit appui-tête, il peut se produire une rotation axiale, dans un sens ou dans l'autre, de la première tige, ceci par « effet de manivelle ».

Le tiroir est alors susceptible de ne plus pouvoir se mettre en regard du cran d'anti-extraction, ce qui entraîne un risque d'éjection de l'appui-tête dans le véhicule.

L'invention a pour but de pallier cet inconvénient.

A cet effet, l'invention propose un système d'appui-tête de siège de véhicule automobile, ledit système comprenant :
- un appui-tête pourvu d'une armature, ladite armature comprenant une première et une deuxième tige parallèles dont les extrémités supérieures sont reliées entre elles par une traverse, la partie supérieure de ladite armature étant recouverte d'un coussin, au moins ladite première tige étant pourvue d'un cran d'anti-extraction sous forme de tranchée, ledit cran présentant :
   ∘ une face de crantage inférieure de blocage de ladite première tige en coulissement vers le haut,
   ∘ une face supérieure de blocage de ladite première tige en coulissement vers le bas, ladite première tige étant pourvue d'un chanfrein principal débouchant sur ladite face supérieure,
- un premier et un deuxième manchon de réception en coulissement respectivement desdites première et deuxième tige, lesdits manchons étant destinés à être montés en haut de dossier dudit siège, au moins ledit premier manchon étant pourvu :
   ∘ d'un tiroir monté en coulissement radial et présentant un bord de crantage agencé pour pouvoir s'insérer dans ledit cran quand ils sont en regard l'un de l'autre,
   ∘ d'un ressort d'actionnement dudit tiroir vers ladite première tige de manière à permettre l'insertion progressive dudit bord dans ledit cran quand ladite première tige est actionnée en coulissement vers le haut, ledit bord coulissant contre ledit chanfrein principal jusqu'à son insertion dans ledit cran,
ledit chanfrein principal étant pourvu en chacune de ses extrémités d'un chanfrein secondaire respectif, de sorte que ledit bord puisse coulisser contre l'un desdits chanfreins secondaires jusqu'à son insertion dans ledit cran en cas de débattement en rotation de ladite première tige de part ou d'autre de sa position nominale selon l'axe d'extension de ladite première tige.

Dans cette description, les termes de positionnement dans l'espace (supérieur, inférieur, haut, bas, latéral,...) sont pris en référence à l'appui-tête disposé dans le véhicule.

Quant au terme « radial », il est pris en référence à l'axe d'extension de la première tige.

La face de crantage inférieure de blocage permet d'empêcher l'extraction de la première tige.

La face supérieure de blocage empêche la première tige de s'affaisser vers le bas en cas de choc de la tête d'un passager sur l'appui-tête, ce qui permet de garantir son maintien en position de sécurité.

On notera que le tiroir peut aussi servir à faire un réglage en hauteur de l'appui-tête si la première tige est pourvue de crans de réglage échelonnés en hauteur.

Concernant l'axe d'extension de la première tige, on précise que, dans le cas d'une tige courbe, son axe est considéré au niveau du cran anti-extraction.

Avec l'agencement proposé, en cas de choc violent de la tête du passager contre l'appui-tête entraînant une rotation axiale de la première tige, dans un sens ou dans l'autre, le bord de crantage peut coulisser contre un chanfrein secondaire jusqu'à son insertion dans le cran anti-extraction, ce qui permet de garantir le crantage malgré ladite rotation.

D'autres particularités et avantages de l'invention apparaîtront dans la description qui suit, faite en référence aux figures jointes, dans lesquelles :

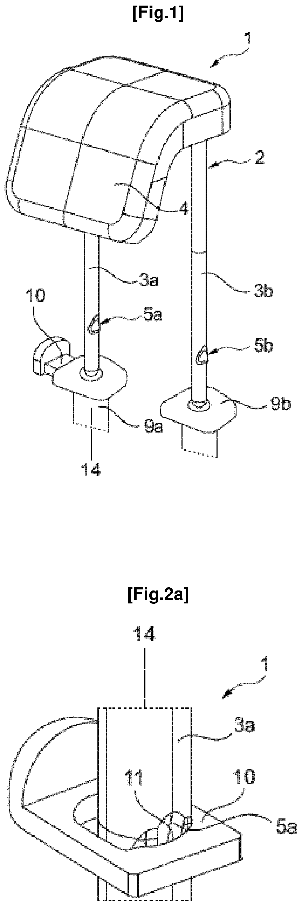

[Fig.1] est une vue schématique en perspective d'un système selon une réalisation, les tiges étant extraites des gaines,
[Fig.2a] et
[Fig.2b] sont des vues schématiques en perspective (figure 2a) et latérale (figure 2b) partielles du système de la figure 1, le bord de crantage du tiroir étant inséré dans un cran d'anti-extraction,
[Fig.3a] et
[Fig.3b] sont des vues schématiques en perspective de crans d'anti-extraction selon respectivement un mode de réalisation.

En référence aux figures, on décrit un système 1 d'appui-tête de siège de véhicule automobile, ledit système comprenant :
- un appui-tête 2 pourvu d'une armature, ladite armature comprenant une première 3a et une deuxième 3b tige parallèles dont les extrémités supérieures sont reliées entre elles par une traverse, non visible sur les figures, la partie supérieure de ladite armature étant recouverte d'un coussin 4, au moins ladite première tige étant pourvue d'un cran 5a d'anti-extraction sous forme de tranchée, ledit cran présentant :
   ∘ une face de crantage inférieure 6 de blocage de ladite première tige en coulissement vers le haut,
   ∘ une face supérieure de blocage 7 de ladite première tige en coulissement vers le bas, ladite première tige étant pourvue d'un chanfrein principal 8 débouchant sur ladite face supérieure,
- un premier 9a et un deuxième 9b manchon de réception en coulissement respectivement desdites première et deuxième tige, lesdits manchons étant destinés à être montés en haut de dossier dudit siège, au moins ledit premier manchon étant pourvu :
   ∘ d'un tiroir 10 monté en coulissement radial et présentant un bord de crantage 11 agencé pour pouvoir s'insérer dans ledit cran quand ils sont en regard l'un de l'autre,
   ∘ d'un ressort 12 d'actionnement dudit tiroir vers ladite première tige de manière à permettre l'insertion progressive dudit bord dans ledit cran quand ladite première tige est actionnée en coulissement vers le haut, ledit bord coulissant contre ledit chanfrein principal jusqu'à son insertion dans ledit cran,
ledit chanfrein principal étant pourvu en chacune de ses extrémités d'un chanfrein secondaire respectif 13a, 13b, de sorte que ledit bord puisse coulisser contre l'un desdits chanfreins secondaires jusqu'à son insertion dans ledit cran en cas de débattement en rotation de ladite première tige de part ou d'autre de sa position nominale selon l'axe d'extension 14 de ladite première tige.

Selon la réalisation représentée, le chanfrein principal 8 est plan, ce qui permet de minimiser la distance de coulissement du bord de crantage 11 contre ledit chanfrein et son insertion au plus tôt dans le cran d'anti-extraction 5a lors d'un coulissement de la tige 3a vers le haut en situation d'accident.

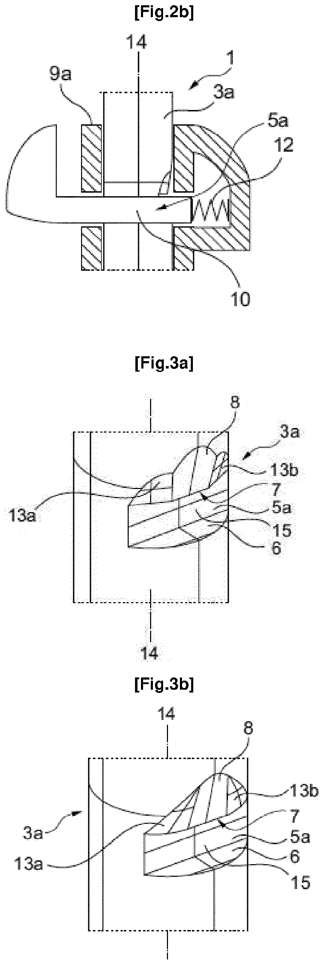

Selon le mode de réalisation représenté en figure 3a, les chanfreins secondaires 13a,13b sont plans.

Selon le mode de réalisation représenté en figure 3b, les chanfreins secondaires 13a,13b sont convexes.

Selon la réalisation représentée :
- un cran anti-extraction 5a s'étend perpendiculairement à l'axe d'extension 14 de la première tige 3a, ledit cran présentant un plan de symétrie passant par ledit axe,
- la face inférieure 6 dudit cran s'inscrit sensiblement selon un plan orthogonal audit axe,
- la face supérieure 7 dudit cran est sensiblement parallèle à ladite face inférieure,
- le chanfrein principal 8 s'étend symétriquement de part et d'autre dudit plan de symétrie,
- les chanfreins secondaires 13a,13b sont disposés symétriquement de part et d'autre dudit plan de symétrie.

Selon la réalisation représentée, le bord de crantage 11 est plan et le cran d'anti-extraction 5a présente une face de fond de cran 15 plane, ladite face reliant la face de crantage inférieure 6 et la face supérieure de blocage 7.

Un tel agencement permet une insertion aussi complète que possible du tiroir 10 dans le cran d'anti-extraction 5a, et donc un ancrage optimisé dudit tiroir dans ledit cran.

Selon un mode de réalisation, les tiges 3a,3b et la traverse sont formées d'une seule pièce à base d'un tube métallique replié, de manière à former une armature monobloc.

Selon un autre mode de réalisation, les tiges 3a,3b sont à base de tube métallique, la traverse étant sous forme d'une pièce séparée - notamment métallique ou en matière plastique - emboitée sur lesdites tiges.

Selon la réalisation représentée, le cran d'anti-extraction 5a est situé en partie inférieure de la première tige 3a.

Selon la réalisation représentée, la deuxième tige 3b est elle aussi pourvue d'un cran d'anti-extraction 5b présentant des caractéristiques analogues à celui 5a de la première tige 3a.

On décrit enfin un appui-tête 2 d'un tel système 1, ledit appui-tête comprenant une armature, ladite armature comprenant une première 3a et une deuxième 3b tige parallèles dont les extrémités supérieures sont reliées entre elles par une traverse, la partie supérieure de ladite armature étant recouverte d'un coussin 4, au moins ladite première tige 3a étant pourvue d'un cran d'anti-extraction 5a sous forme de tranchée, ledit cran présentant :
∘ une face de crantage inférieure 6 de blocage de ladite première tige en coulissement vers le haut,
∘ une face supérieure 7 de blocage de ladite première tige en coulissement vers le bas, ladite première tige étant pourvue d'un chanfrein principal 8 débouchant sur ladite face supérieure,
ledit chanfrein principal étant pourvu de deux chanfreins secondaires 13a,13b respectifs disposés en ses extrémités.

Le coussin 4 peut par exemple être sous la forme d'un bloc de mousse souple surmoulant le haut de l'armature, ledit bloc étant revêtu d'une coiffe de matériau de revêtement.

## Revendications

1. Système (1) d'appui-tête de siège de véhicule automobile, ledit système comprenant :
• un appui-tête (2) pourvu d'une armature, ladite armature comprenant une première (3a) et une deuxième (3b) tiges parallèles dont les extrémités supérieures sont reliées entre elles par une traverse, la partie supérieure de ladite armature étant recouverte d'un coussin (4), au moins ladite première tige étant pourvue d'un cran d'anti-extraction (5a) sous forme de tranchée, ledit cran présentant :
∘ une face de crantage inférieure (6) de blocage de ladite première tige en coulissement vers le haut,
∘ une face supérieure de blocage (7) de ladite première tige en coulissement vers le bas, ladite première tige étant pourvue d'un chanfrein principal (8) débouchant sur ladite face supérieure,
• un premier (9a) et un deuxième (9b) manchon de réception en coulissement respectivement desdites première et deuxième tige, lesdits manchons étant destinés à être montés en haut de dossier dudit siège, au moins ledit premier manchon étant pourvu :
∘ d'un tiroir (10) monté en coulissement radial et présentant un bord de crantage (11) agencé pour pouvoir s'insérer dans ledit cran quand ils sont en regard l'un de l'autre,
∘ d'un ressort (12) d'actionnement dudit tiroir vers ladite première tige de manière à permettre l'insertion progressive dudit bord dans ledit cran quand ladite première tige est actionnée en coulissement vers le haut, ledit bord coulissant contre ledit chanfrein principal jusqu'à son insertion dans ledit cran,
ledit système étant **caractérisé en ce que** ledit chanfrein principal est pourvu en chacune de ses extrémités d'un chanfrein secondaire respectif (13a,13b), de sorte que ledit bord puisse coulisser contre l'un desdits chanfreins secondaires jusqu'à son insertion dans ledit cran en cas de débattement en rotation de ladite première tige de part ou d'autre de sa position nominale selon l'axe d'extension (14) de ladite première tige.

2. Système selon la revendication 1, **caractérisé en ce que** le chanfrein principal (8) est plan.

3. Système selon l'une des revendications 1 ou 2, **caractérisé en ce que** les chanfreins secondaires (13a,13b) sont plans.

4. Système selon l'une des revendications 1 ou 2, **caractérisé en ce que** les chanfreins secondaires (13a,13b) sont convexes.

5. Système selon l'une quelconque des revendications 1 à 4, **caractérisé en ce que** :
• un cran anti-extraction (5a) s'étend perpendiculairement à l'axe d'extension (14) de la première tige (3a), ledit cran présentant un plan de symétrie passant par ledit axe,
• la face inférieure dudit cran s'inscrit sensiblement selon un plan orthogonal audit axe,
• la face supérieure dudit cran est sensiblement parallèle à ladite face inférieure,
• le chanfrein principal (8) s'étend symétriquement de part et d'autre dudit plan de symétrie,
• les chanfreins secondaires (13a,13b) sont disposés symétriquement de part et d'autre dudit plan de symétrie.

6. Système selon l'une quelconque des revendications 1 à 5, **caractérisé en ce que** le bord de crantage (11) est plan et le cran d'anti-extraction (5a) présente une face de fond de cran (15) plane, ladite face reliant la face de crantage inférieure (6) et la face supérieure de blocage (7).

7. Système selon l'une quelconque des revendications 1 à 6, **caractérisé en ce que** les tiges (3a,3b) et la traverse sont formées d'une seule pièce à base d'un tube métallique replié, de manière à former une armature monobloc.

8. Système selon l'une quelconque des revendications 1 à 6, **caractérisé en ce que** les tiges (3a,3b) sont à base de tube métallique, la traverse étant sous forme d'une pièce séparée emboitée sur lesdites tiges.

9. Système selon l'une quelconque des revendications 1 à 8, **caractérisé en ce que** le cran d'anti-extraction (5a) est situé en partie inférieure de la première tige (3a).

10. Appui-tête (2) d'un système selon l'une quelconque des revendications précédentes, ledit appui-tête comprenant une armature, ladite armature comprenant une première (3a) et une deuxième (3b) tiges parallèles dont les extrémités supérieures sont reliées entre elles par une traverse, la partie supérieure de ladite armature étant recouverte d'un coussin (4), au moins ladite première tige étant pourvue d'un cran d'anti-extraction (5a) sous forme de tranchée, ledit cran présentant :
∘ une face de crantage inférieure (6) de blocage de ladite première tige en coulissement vers le haut,
∘ une face supérieure de blocage (7) de ladite première tige en coulissement vers le bas, ladite première tige étant pourvue d'un chanfrein principal (8) débouchant sur ladite face supérieure,
ledit appui-tête étant **caractérisé en ce que** ledit chanfrein principal est pourvu de deux chanfreins secondaires (13a,13b) respectifs disposés en ses extrémités.

## Patentansprüche

1. Kopfstützensystem (1) am Sitz eines Kraftfahrzeugs, wobei das System umfasst:
• eine Kopfstütze (2), die mit einer Armierung versehen ist, wobei die Armierung eine erste (3a) und eine zweite (3b) parallele Stange umfasst, deren obere Enden durch einen Querträger miteinander verbunden sind, wobei der obere Teil der Armierung mit einem Kissen (4) bedeckt ist, wobei mindestens die erste Stange mit einer Anti-Extraktionsraste (5a) in Form einer Kerbe versehen ist, wobei die Raste aufweist:
∘ eine untere Arretierungsrastfläche (6) des Gleitens der ersten Stange nach oben,
∘ eine obere Arretierungsfläche (7) des Gleitens der ersten Stange nach unten, wobei die erste Stange mit einer Hauptschräge (8) versehen ist, die auf die obere Fläche führt,
• eine erste (9a) und eine zweite (9b) Aufnahmehülse der jeweiligen gleitenden ersten und zweiten Stange, wobei die Hülsen zur Anbringung oben auf der Rückenlehne des Sitzes bestimmt sind, wobei mindestens die erste Hülse versehen ist mit:
∘ einem Schieber (10), der radial gleitend angebracht ist und einen Rastrand (11) aufweist, der zum Einsetzen in die Raste eingerichtet ist, wenn sie einander gegenüberliegen,
∘ eine Betätigungsfeder (12) des Schiebers zur ersten Stange, um das schrittweise Einsetzen des Randes in die Raste zu erlauben, wenn die erste Stange nach oben gleitend betätigt wird, wobei der Rand an der Hauptschräge bis zu seinem Einsetzen in die Raste gleitet, wobei das System **dadurch gekennzeichnet ist, dass** die Hauptschräge an jedem ihrer Enden mit einer jeweiligen sekundären Schräge (13a, 13b) versehen ist, so dass der Rand bei einem Rotationsausschlag der ersten Stange zu der einen oder anderen Seite ihrer nominalen Position gemäß der Extensionsachse (14) der ersten Stange an einer der sekundären Schrägen bis zu seinem Einsetzen in die Raste gleiten kann.

2. System nach Anspruch 1, **dadurch gekennzeichnet, dass** die Hauptschräge (8) eben ist.

3. System nach einem der Ansprüche 1 oder 2, **dadurch gekennzeichnet, dass** die sekundären Schrägen (13a, 13b) eben sind.

4. System nach einem der Ansprüche 1 oder 2, **dadurch gekennzeichnet, dass** die sekundären Schrägen (13a, 13b) konvex sind.

5. System nach einem der Ansprüche 1 bis 4, **dadurch gekennzeichnet, dass**:
• sich eine Anti-Extraktionsraste (5a) senkrecht zur Extensionsachse (14) der ersten Stange (3a) erstreckt, wobei die Raste eine Symmetrieebene aufweist, die durch die Achse verläuft,
• die innere Fläche der Raste etwa in einer zu der Achse orthogonalen Ebene liegt,
• die obere Fläche der Raste etwa parallel zu unteren Fläche ist,
• sich die Hauptschräge (8) symmetrisch zur einen und anderen Seite der Symmetrieebene erstreckt,
• die sekundären Schrägen (13a, 13b) symmetrisch zu beiden Seiten der Symmetrieebene angeordnet sind.

6. System nach einem der Ansprüche 1 bis 5, **dadurch gekennzeichnet, dass** der Rastrand (11) eben ist und die Anti-Extraktionsraste (5a) eine ebene Rastbodenfläche (15) aufweist, wobei die Fläche die untere Rastfläche (6) und die obere Arretierungsfläche (7) verbindet.

7. System nach einem der Ansprüche 1 bis 6, **dadurch gekennzeichnet, dass** die Stangen (3a, 3b) und der Querträger aus einem einzigen Teil auf der Basis eines gebogenen Metallrohrs derart gebildet sind, dass sie eine einteilige Armierung bilden.

8. System nach einem der Ansprüche 1 bis 6, **dadurch gekennzeichnet, dass** die Stangen (3a, 3b) auf der Basis eines Metallrohrs sind, wobei der Querträger in Form eines separaten Teils gebildet ist, das auf die Stangen gesteckt ist.

9. System nach einem der Ansprüche 1 bis 8, **dadurch gekennzeichnet, dass** sich die Anti-Extraktionsraste (5a) im unteren Teil der ersten Stange (3a) befindet.

10. Kopfstütze (2) eines Systems nach einem der vorangehenden Ansprüche, wobei die Kopfstütze eine Armierung umfasst, wobei die Armierung eine erste (3a) und eine zweite (3b) parallele Stange umfasst, deren obere Enden durch einen Querträger miteinander verbunden sind, wobei der obere Teil der Armierung mit einem Kissen (4) bedeckt ist, wobei mindestens die erste Stange mit einer Anti-Extraktionsraste (5a) in Form einer Kerbe versehen ist, wobei die Raste aufweist:
∘ eine untere Arretierungsrastfläche (6) des Gleitens der ersten Stange nach oben,
∘ eine obere Arretierungsfläche (7) des Gleitens der ersten Stange nach unten, wobei die erste Stange mit einer Hauptschräge (8) versehen ist, die auf die obere Fläche führt,
wobei die Kopfstütze **dadurch gekennzeichnet ist, dass** die Hauptschräge mit zwei jeweiligen sekundären Schrägen (13a, 13b) versehen ist, die an ihren Enden angeordnet sind.

## Claims

1. Headrest system (1) for a motor vehicle seat, said system comprising:
- a headrest (2) provided with a frame, said frame comprising a first (3a) and a second (3b) parallel rod, the upper ends of which are connected to each other by a crosspiece, the upper part of said frame being covered by a pad (4), at least said first rod being provided with an anti-extraction notch (5a) in the form of a trench, said notch having:
-- a lower locking face (6) for blocking said first rod from sliding upwards,
-- an upper face (7) for blocking said first rod from sliding downwards, said first rod being provided with a main chamfer (8) opening onto said upper face,
- a first (9a) and a second (9b) sleeve for slidingly receiving said first and second rod respectively, said sleeves being intended to be mounted at the top of the back of said seat, at least said first sleeve being provided:
-- with a radially slidable spool (10) having a locking edge (11) arranged to be able to be inserted into said notch when they are facing each other,
-- with a spring (12) for actuating said spool towards said first rod so as to allow the gradual insertion of said edge into said notch when said first rod is slid upwards, said edge sliding against said main chamfer until it is inserted into said notch,
said system being **characterised in that** said main chamfer is provided at each of its ends with a respective secondary chamfer (13a, 13b) such that said edge can slide against one of said secondary chamfers until it is inserted into said notch in the event of rotational movement of said first rod on either side of its nominal position along the axis of extension (14) of said first rod.

2. System according to claim 1, **characterised in that** the main chamfer (8) is flat.

3. System according to either of claims 1 or 2, **characterised in that** the secondary chamfers (13a, 13b) are flat.

4. System according to either of claims 1 or 2, **characterised in that** the secondary chamfers (13a, 13b) are convex.

5. System according to any one of claims 1 to 4, **characterised in that**:
- an anti-extraction notch (5a) extends perpendicularly to the axis of extension (14) of the first rod (3a), said notch having a plane of symmetry passing through said axis,
- the lower face of said notch lies substantially in a plane orthogonal to said axis,
- the upper face of said notch is substantially parallel to said lower face,
- the main chamfer (8) extends symmetrically on either side of said plane of symmetry,
- the secondary chamfers (13a, 13b) are arranged symmetrically on either side of said plane of symmetry.

6. System according to any one of claims 1 to 5, **characterised in that** the locking edge (11) is flat and the anti-extraction notch (5a) has a flat notch bottom face (15), said face connecting the lower locking face (6) and the upper blocking face (7).

7. System according to any one of claims 1 to 6, **characterised in that** the rods (3a, 3b) and the crosspiece are formed in one piece from a folded metal tube so as to form a one-piece frame.

8. System according to any one of claims 1 to 6, **characterised in that** the rods (3a, 3b) are made of metal tube, the crosspiece being in the form of a separate piece fitted onto said rods.

9. System according to any one of claims 1 to 8, **characterised in that** the anti-extraction notch (5a) is situated in the lower part of the first rod (3a).

10. Headrest (2) of a system according to any one of the preceding claims, said headrest comprising a frame, said frame comprising a first (3a) and a second (3b) parallel rod, the upper ends of which are connected to each other by a crosspiece, the upper part of said frame being covered by a pad (4), at least said first rod being provided with an anti-extraction notch (5a) in the form of a trench, said notch having:
- a lower locking face (6) for blocking said first rod from sliding upwards,
- an upper face (7) for blocking said first rod from sliding downwards, said first rod being provided with a main chamfer (8) opening onto said upper face,
said headrest being **characterised in that** the main chamfer is provided with two respective secondary chamfers (13a, 13b) arranged at its ends.
